# EUROPÄISCHE PATENTANMELDUNG

(11) **EP 3 584 997 A1**
(43) Veröffentlichungstag der Anmeldung: **25.12.2019**
(21) Anmeldenummer: 18178848.0
(22) Anmeldetag: 20.06.2018
(51) Int. Cl.: H04L 12/24

(54) **VERFAHREN ZUR KONFIGURATIONSÄNDERUNG VON VERBUNDENEN NETZWERKEN**

(71) Anmelder: Siemens Aktiengesellschaft, 80333 München (DE)
(72) Erfinder: Kintzler, Florian, 1140 Wien (AT)
(74) Vertreter: Maier, Daniel Oliver

(57) **Zusammenfassung**

Die gegenständliche Erfindung betrifft ein Verfahren zur Konfigurationsänderung von zumindest zwei verbundenen Netzwerken (N1, N2), welche aus Komponenten (11, ..., 16; 21, ..., 28) bestehen und durch zumindest eine Komponente (Kx) miteinander verbunden sind. Dabei ist zumindest eines der zumindest zwei Netzwerke (N1, N2) als Kommunikationsnetz ausgestaltet. Das Verfahren umfasst dabei die folgenden Schritte:
- Erstellen (101) von digitalen Modellen (M1, M2) der zumindest zwei Netzwerke (N1, N2) auf Basis von Netzwerkanalysen;
- Erstellen (102) von digitalen Komponentenmodellen (KMx) für die zumindest eine verbindende Komponente (Kx), wobei in einem jeweiligen digitalen Komponentenmodell (KMx) zumindest eine jeweilige Interaktion der zumindest einen verbindenden Komponente (Kx) mittels Eigenschaften eines der zumindest zwei Netzwerke (N1, N2) abgebildet wird;
- Ableiten (103) eines Ablaufs (PA) der Konfigurationsänderung auf Basis der digitalen Modelle (M1, M2) der zumindest zwei Netzwerke (N1, N2) und der digitalen Komponentenmodelle (KMx) für die zumindest eine verbindende Komponente (Kx);
- Zerlegen (104) des Ablaufs (PA) der Konfigurationsänderung in dezentral durchführbare Ablaufeinheiten (PAVx); und
- Verteilen wie Durchführen (105) der dezentral durchführbaren Ablaufeinheiten (PAVx) unter Berücksichtigung von zeitlichen und räumlichen Abhängigkeiten auf zumindest einer dezentralen Ablaufsteuereinheit (Sx) in zumindest einem der zumindest zwei Netzwerke (N1, N2).

## Beschreibung

### Technisches Gebiet

Die gegenständliche Erfindung betrifft ein Verfahren zur Konfigurationsänderung von zumindest zwei verbundenen Netzwerken. Dabei bestehen die zumindest zwei Netzwerke aus Komponenten, wobei die zumindest zwei Netzwerke durch zumindest eine Komponente verbunden sind. Weiterhin ist zumindest eines der zumindest zwei Netzwerke als Kommunikationsnetz ausgestaltet.

### Stand der Technik

Heutzutage gibt es in vielen Bereichen wie z.B. im Energiebereich, in der Gebäudetechnik, im Fertigungs- und Automatisierungsbereich, in der Verkehrsleittechnik, etc. Systeme, welche aus zumindest zwei unterschiedlichen Netzwerken bestehen. Diese Netzwerke umfassen üblicherweise mehrere bis zu einer Vielzahl an Komponenten und sind über zumindest eine Komponente miteinander verknüpft bzw. verbunden.

Dabei wird beispielsweise zumindest eines der zumindest zwei Netzwerke von einem Kommunikationsnetz gebildet, welches aus Komponenten wie z.B. Rechnereinheiten, Routern, Switches, Zugangseinheiten, IP-Endgeräten, etc. sowie entsprechende Verbindungen (z.B. Kabel, Glasfaser, Verbinder, drahtlose Kommunikationsverbindungen, etc.) besteht. Das Kommunikationsnetz stellt üblicherweise eine Infrastruktur für eine Übermittlung von Informationen und/oder Daten beispielsweise in Form von Datenpaketen zwischen verschiedenen Komponenten des Kommunikationsnetzes selbst oder zur Kommunikation mit Komponenten eines zumindest zweiten Netzwerkes zur Verfügung. Das Kommunikationsnetz bietet damit eine Kommunikationsstruktur, über welche auf den Komponenten ablaufende Anwendungen und Applikationen kommunizieren können. Weiterhin können manche Komponenten des Kommunikationsnetzes wie z.B. vermittelnde Komponenten (z.B. Switche, etc.) z.B. auch als virtuelle bzw. Softwarelösung und nicht als physikalische Hardwarelösung realisiert sein.

Das zumindest zweite Netzwerk des Systems wird von meist physikalischen Einheiten als Netzwerkkomponenten gebildet. Im Energiebereich, insbesondere bei so genannten Smart Grids, wird dieses Netzwerk z.B. durch ein Energieversorgungsnetz gebildet. Als Komponenten kann das Netzwerk physikalische Einheiten wie z.B. Verbraucher, Erzeuger, Zählereinheiten, Messeinrichtungen, Transformatorstationen, Stromleitungen, etc. umfassen. Im Bereich der Gebäudetechnik, insbesondere bei so genannten Smart Buildings, kann das zumindest zweite Netzwerk z.B. Sensoren, von welchen verschiedenen Zustände (z.B. Temperatur, Luftfeuchte, CO₂-Gehalt der Luft, Helligkeit, Rauchmelder, etc.) in einem Gebäude bzw. in einzelnen Gebäudebereichen oder Räumen ermittelt werden, sowie Aktuatoren, von welchen die von den Sensoren ermittelten Zustände beeinflusst werden, umfassen. Im Automatisierungs- und Fertigungsbereich kann das zumindest zweite Netzwerk aus physikalischen Komponenten wie z.B. Fertigungseinheiten, Fertigungsstationen, etc. bestehen, welche durch Arbeitsvorgänge bzw. einen Fertigungsprozess logisch miteinander verknüpft sind.

Die zumindest zwei Netzwerke sind üblicherweise über zumindest eine Komponente funktional verknüpft bzw. verbunden. D.h., es können beispielsweise Komponenten des Kommunikationsnetzes Komponenten des zumindest zweiten Netzwerkes z.B. steuern, kontrollieren oder regeln oder Daten (z.B. Messwerte, Sensorzustände, etc.) von Komponenten des zumindest zweiten Netzwerks das Kommunikationsnetz beeinflussen. Bei einem System aus einem Energieversorgungsnetz und einem Kommunikationsnetz können beispielsweise durch Komponenten des Kommunikationsnetzes oder von auf diesen Komponenten laufenden Anwendungen Messwerte aus dem Energieversorgungsnetz abgefragt, gespeichert und gegebenfalls zentral weiterverarbeitet werden. Weiterhin können z.B. anhand von Messwerten Komponenten des Energieversorgungsnetzes mittels Komponenten des Kommunikationsnetzes durch entsprechende Kommandos/Steuerbefehle gesteuert oder kontrolliert werden. In der Gebäudetechnik können Messwerte der Sensoren des physikalischen Netzwerkes beispielsweise mittels Komponenten des Kommunikationsnetzwerkes abgefragt und ausgewertet werden, um z.B. in der Folge über Steuer- oder Regelkommandos Aktuatoren des physikalischen Netzwerks anzusteuern. Weiterhin werden z.B. bei modernen Fertigungsanlagen physikalische Komponenten des physikalischen Netzwerkes durch meist software-getriebene Komponenten entsprechend gesteuert und kontrolliert, von welchen mit einem Kommunikationsnetz interagiert wird. Gegebenenfalls kann im Bereich von modernen Fertigungsanlagen über das Kommunikationsnetz zusätzlich auch eine Verknüpfung mit einem Energieversorgungsnetz gegeben sein, um z.B. eine autarke Stromversorgung der Fertigungsanlage zu überwachen bzw. sicherzustellen.

Eine Topologie des Kommunikationsnetzes kann dabei beispielsweise weitgehend ident mit einer Topologie des zweiten mit dem Kommunikationsnetz verbundenen bzw. verknüpften Netzwerks sein. Üblicherweise weicht allerdings die Topologie des Kommunikationsnetzes aber von der Topologie des zumindest zweiten Netzwerkes (z.B. Energieversorgungsnetz, Fertigungsanlage, Gebäudetechniknetz, Verkehrsleitsystems, etc.) ab, mit welchem das Kommunikationsnetz verbunden bzw. verknüpft ist. So kann beispielsweise bei einer Fertigungsanlage die Struktur bzw. Konfiguration des Kommunikationsnetzwerks mit einem Aufbau der Fertigungsanlage weitgehend übereinstimmen oder auch komplett unterschiedlich ausgestaltet sein - z.B. eine lineare Fertigungsstraße, welche in der logischen Abfolge der Fertigungsschritte aufgebaut ist, ist mit einem Kommunikationsnetz verbunden, dessen Komponenten z.B. über einen zentralen Zugangspunkt an ein drahtloses Kommunikationsnetz (z.B. Wireless LAN) angebunden sind. In der Gebäudetechnik können beispielsweise Sensoren und/oder Aktuatoren, welche z.B. in räumlicher Nachbarschaft montiert sind, in einem Fall mittels drahtloser Anbindung (z.B. Wireless LAN) und im anderen Fall über eine kabelgebundene Anbindung mit dem Kommunikationsnetz verbunden sein. Im Energiebereich kann teilweise ein bestehendes Energieversorgungsnetz zur Übertragung von Daten zwischen Komponenten (z.B. Powerline-Communication) genutzt werden oder es gibt ein zusätzliches drahtgebundenes oder drahtloses Kommunikationsnetz, welches für die Übertragung von Daten eingesetzt wird. Häufig ist die Struktur bzw. Konfiguration der Kommunikationsnetze nicht oder nur teilweise bekannt - insbesondere bei einer Einbindung von öffentlichen Netzwerken (z.B. Telefonnetz, Datennetz, Mobilfunknetz, etc.) oder bei Verwendung von so genannten vermaschten Netzwerken, bei welchen Daten/Informationen von einem Netzwerkknoten zum nächsten bis zu einem Zielknoten übertragen werden.

Weiterhin können sich die Topologien bzw. Konfigurationen der zumindest zwei verbundenen Netzwerke dynamisch verändern. So können sich z.B. in einem Kommunikationsnetz durch Hinzufügen, Entfernen oder Verändern einer Komponente und/oder durch Änderungen einer auf einer oder mehreren Komponenten laufenden Anwendung (z.B. Versionsänderung, etc.) Datenübertragungsrouten, eine Art der Datenübertragung (z.B. kontinuierliche Übertragung, Bulk-Transfer, etc.), etc. verändern und damit das zumindest zweite Netzwerk beeinflussen. Es kann dadurch z.B. zu Fehlsteuerungen, Einschränkungen in der Verfügbarkeit von Komponenten und gegebenenfalls zu Instabilitäten und/oder Ausfällen im dem Kommunikationsnetz verbundenen Netzwerk kommen.

Andererseits können Struktur-/Konfigurationsänderungen im zumindest zweiten Netzwerk (z.B. Umschalten oder Ausfall von Leitungen oder Komponenten im Energienetzwerk, Hinzufügen/Entfernen oder Upgrades von Komponenten in Energie- oder Gebäudetechniknetzwerken, Umbau oder Umrüsten einer Fertigungsanlage, etc.) Rückwirkungen auf das verbundene Kommunikationsnetz aufweisen. Es kann dadurch z.B. zu erhöhtem Datenverkehr oder zu Störungen bei der Datenübertragung, etc. im Kommunikationsnetz kommen, wenn Veränderungen von physikalischen Komponenten und damit der Konfiguration des zumindest zweiten Netzwerkes beispielsweise zentral gesteuert und durchgeführt werden. Für die Funktionsfähigkeit der zumindest zwei verbundenen Netzwerke ist es daher wichtig, dass mögliche negative Beeinflussungen bei Struktur- bzw. Konfigurationsänderungen in zumindest einem der Netzwerke minimiert bzw. gering gehalten werden, und dass ein Ablauf einer Konfigurationsänderung von einer oder mehreren Komponenten in einem der Netzwerke auf einfache Weise abgebrochen und gegebenenfalls rückabgewickelt werden kann, ohne Stabilität und Verfügbarkeit des aus zumindest zwei Netzwerken bestehenden Gesamtsystems zu gefährden.

Derzeit werden beispielsweise Konfigurationsänderungen einer Netzwerkstruktur wie z.B. Neuinstallationen und/oder Re-Konfigurationen von Komponenten, insbesondere von in einem der Netzwerke (z.B. Kommunikationsnetz) genutzter Anwendungen häufig manuell geplant und gemäß dieser manuellen Planung umgesetzt. Allerdings werden bei der Planung mögliche Auswirkungen der jeweiligen Konfigurationsänderungen durch z.B. Veränderungen von einer oder mehrerer Komponenten bzw. der Netzwerkstruktur des einen Netzwerkes im zumindest zweiten Netzwerk kaum dynamisch miteinbezogen. Es werden zwar vor allem bei Komponenten, durch welche die zumindest zwei Netzwerke verbunden sind, in der Prozessplanung z.B. Bedingungen definiert, welche in den zumindest zwei Netzwerken während der jeweiligen Konfigurationsänderung einzuhalten sind. Diese Bedingungen können beispielsweise während einer Durchführung der jeweiligen Konfigurationsänderung manuell überwacht werden, aber eine automatische Erkennung und vor allem Reduktion bzw. Vermeidung von negativen Wechselwirkungen sowie Verletzung dieser Bedingungen ist dadurch kaum gegeben.

### Darstellung der Erfindung

Der Erfindung liegt daher die Aufgabe zugrunde, ein Verfahren zur Konfigurationsänderung von verbundenen Netzwerken anzugeben, bei welchem Auswirkungen der jeweiligen Konfigurationsänderung in einem der zumindest zwei Netzwerke vor allem auf eine Stabilität und/oder eine Verfügbarkeit der Netzwerke sowie in einem Fehlerfall bei der jeweiligen Konfigurationsänderung erheblich reduziert werden.

Diese Aufgabe wird durch Verfahren zur Konfigurationsänderung von verbundenen Netzwerken der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren zur Konfigurationsänderung von verbundenen Netzwerken der eingangs erwähnten Art, welches die folgenden Schritte umfasst:
- Erstellen von digitalen Modellen der zumindest zwei Netzwerke auf Basis von Netzwerkanalysen;
- Erstellen von digitalen Komponentenmodellen für die zumindest eine verbindende Komponente, wobei in einem jeweiligen digitalen Komponentenmodell zumindest eine jeweilige Interaktion der zumindest einen verbindenden Komponente mittels Eigenschaften eines der zumindest zwei Netzwerke abgebildet wird;
- Ableiten eines Ablaufs der Konfigurationsänderung auf Basis der digitalen Modelle der zumindest zwei Netzwerke und der digitalen Komponentenmodelle für die zumindest eine verbindende Komponente;
- Zerlegen des Ablaufs der Konfigurationsänderung in dezentral durchführbare Ablaufeinheiten; und
- Verteilen und Durchführen der Ablaufeinheiten unter Berücksichtigung von zeitlichen und räumlichen Abhängigkeiten auf zumindest einer dezentralen Ablaufsteuereinheit in zumindest einem der zumindest zwei Netzwerke.

Der Hauptaspekt der erfindungsgemäß vorgeschlagenen Lösung besteht darin, dass mittels dynamischer Netzwerkanalysen digitale Modelle der zumindest zwei Netzwerke sowie digitale Komponentenmodelle erstellt werden, wobei bei der Modellierung der digitalen Komponentenmodelle, in welchen die jeweiligen Interaktionen der zumindest eine die Netzwerke verbindenden Komponente abgebildet werden, auf einfache Weise Auswirkungen der Konfigurationsänderung miteinbezogen werden können. Idealerweise werden Eigenschaften und Bedingungen der zumindest zwei Netzwerke in den digitalen Komponentenmodellen berücksichtigt. Derartige Eigenschaften bzw. Bedingungen sind z.B. Verfügbarkeit/Kapazitäten von Verbindungen für z.B. Daten, Energie, Steuerbefehle, etc., zulässige und/oder maximal mögliche Netzauslastung, zulässige Auswirkungen durch Steuerbefehle, durch einen Ablauf einer Applikation auf das jeweilige Netzwerk, etc. Die digitalen Komponentenmodelle können auch Eigenschaften von Teilkomponenten abbilden oder im Fall von einer Rechnereinheit, auf welcher eine oder mehrere Anwendungen bzw. Applikationen ablaufen, kann auch ein explizites Verhalten einer Anwendung im jeweiligen digitalen Komponentenmodell abgebildet werden.

Auf Basis der digitalen Modelle wird dann ein Ablauf der Konfigurationsänderung abgeleitet, welcher in dezentral durchführbare Ablaufeinheiten zerlegbar ist, wobei zeitliche Abhängigkeiten berücksichtigt werden. Die Ablaufeinheiten können für eine Durchführung auf zumindest eine dezentrale Ablaufsteuereinheit in einem der zumindest zwei Netzwerke entsprechend räumlicher und zeitlicher Abhängigkeiten übertragen werden. Dadurch wird der Ablauf der Konfigurationsänderung derart optimiert, dass negative Einflüsse auf Verfügbarkeit und Stabilität weitgehend minimiert werden und/oder in den digitalen Modellen vorgegebene Bedingungen (z.B. maximale und/oder zulässige Netzkapazitäten, Vorgaben für Auslastung, Abfolge, Abhängigkeiten zwischen Anwendungen, etc.) erfüllt werden.

Weiterhin verläuft die Erstellung und Durchführung der Konfigurationsänderung der verbundenen Netzwerke weitgehend dynamisch - d.h., eine manuelle Planung und/oder Überwachung durch z.B. einen Bediener kann weitgehend reduziert und damit Kosten gespart werden. Die Unterteilung des Ablaufs der Konfigurationsänderung auf dezentral durchführbare Ablaufeinheiten bzw. die Verteilung der Ablaufeinheiten auf eine oder idealerweise mehrere dezentrale Ablaufsteuereinheiten in einem der zumindest zwei Netzwerke ermöglicht es, die Durchführung der Konfigurationsänderung möglichst lokal einzugrenzen. Dadurch werden die Auswirkungen der Konfigurationsänderung auf die Netzwerke weiterhin reduziert.

Weiterhin ist es von Vorteil, wenn auf Basis der Durchführung der örtlich dezentral durchführbaren Ablaufeinheiten die digitalen Modelle der zumindest zwei Netzwerke und/oder die digitalen Komponentenmodelle laufend angepasst werden. Dadurch kann der Ablauf der Konfigurationsänderung auf einfache Weise laufend an tatsächliche Gegebenheiten in einem der zumindest zwei Netzwerke angepasst bzw. dynamisch optimiert werden.

Es ist außerdem günstig, wenn für die zumindest eine dezentrale Ablaufsteuereinheit zumindest eine Komponente in einem der zumindest zwei Netzwerke fix vorgegeben wird. Alternativ oder zusätzlich kann für die Ablaufsteuereinheit auch zumindest eine Komponente in einem der zumindest zwei Netzwerke, insbesondere im Kommunikationsnetz, dynamisch anhand des Ablaufs der Konfigurationsänderung ausgewählt werden, welche z.B. eine optimale Positionierung für zumindest einen Teil der Konfigurationsänderung aufweist. Damit kann der Ablauf der Konfigurationsänderung dezentral in einem der zwei Netzwerke - bevorzugter Weise im Kommunikationsnetz - verteilt werden. Die jeweils als dezentrale Ablaufsteuereinheit genutzte Komponente kann dabei z.B. als Art Proxy-Server - d.h. Kommunikationsschnittstelle bzw. Vermittlungsrechner im Netzwerk - für die Durchführung der jeweiligen örtlich dezentral durchführbaren Ablaufeinheit fungieren. Dadurch können beispielsweise ein Netzwerkverkehr oder eine Datenübertragung reduziert sowie eine Abhängigkeit der Konfigurationsänderung von einer Verfügbarkeit der Kommunikationsverbindungen zu einer zentralen Steuerkomponente in einem der zumindest zwei Netzwerke vermieden werden.

Idealerweise können eine oder mehrere Komponenten als Ablaufsteuereinheit vorgegeben oder dynamisch ausgewählt werden, von welchen eine Steuerfunktionalität (z.B. in Form einer Anwendung bzw. Applikation) umfasst wird. Diese Komponenten können dann auf einfache Weise die jeweiligen Ablaufeinheiten bzw. die jeweilige Konfigurationsänderung durchführen. Weist eine als Ablaufsteuereinheit vorgegebene oder dynamisch ausgewählte Komponente keine Steuerfunktionalität auf, so kann diese Komponente dynamisch mit der Steuerfunktionalität ausgestattet werden - beispielsweise bevor oder parallel zur Verteilung der durchführbaren Ablaufeinheiten. Damit können entsprechend der jeweiligen Konfigurationsänderung zumindest eine beliebige Komponente in einem der zumindest zwei Netzwerke vorgegeben oder dynamisch anhand des Ablaufs der Konfigurationsänderung ausgewählt werden, um als Ablaufsteuereinheit fungieren zu können.

Die Durchführung der jeweiligen dezentral durchführbaren Ablaufeinheit erfolgt idealerweise in den von der jeweiligen Konfigurationsänderung betroffenen Netzteilen. D.h. die Ausführung der Konfigurationsänderung wird damit möglichst lokal eingrenzt und Auswirkungen auf ein gewolltes Maß reduziert. Dazu wird der Ablauf der Konfigurationsänderung in vorteilhafter Weise als zeitlich und örtlich dezentral steuerbare Struktur erstellt, durch welche auf einfache Weise festgelegt wird, auf welcher Komponente, zu welchem Zeitpunkt, welcher Schritt der Konfigurationsänderung durchgeführt werden muss, und welche auch ein Zurücksetzen in einen Ausgangszustand im Fehlerfall ermöglicht.

Eine bevorzugte Aufführungsform des erfindungsgemäßen Verfahrens sieht vor, dass der Ablauf der Konfigurationsänderung von einer zentralen Steuerkomponente in einem der zumindest zwei Netzwerke, insbesondere im Kommunikationsnetz, erstellt, gespeichert und verwaltet wird. Damit kann die Erstellung und Verwaltung des Ablaufs der Konfigurationsänderung sehr einfach an einer zentralen Stelle durchgeführt und gegebenenfalls überwacht werden. Dabei wird idealerweise eine Übertragung der örtlich dezentral durchführbaren Ablaufeinheiten an die zumindest eine vorgebbare, dezentrale Ablaufsteuereinheit durch die zentrale Steuerkomponente durchgeführt.

Bei einer alternativen Ausführungsform des erfindungsgemäßen Verfahrens kann der Ablauf der Konfigurationsänderung koordiniert in einem der zumindest zwei Netzwerke, insbesondere im Kommunikationsnetz, dezentral erstellt, gespeichert und verwaltet werden. Dazu kann beispielsweise die zumindest eine vorgebbare, dezentrale Ablaufsteuereinheit verwendet werden. Bei einer dezentralen Erstellung und Verwaltung des Ablaufs der Konfigurationsänderung kann dieser z.B. als koordinierte Rechenoperationen in der zumindest einen Ablaufsteuereinheit ausgeführt sein. Weiterhin ist auch eine Kombination aus einer zentralen Erstellung des Ablaufs der Konfigurationsänderung z.B. in einer zentralen Steuerkomponente und einer dezentralen Optimierung z.B. in der zumindest einen vorgebbaren, dezentralen Ablaufsteuereinheit denkbar.

Es ist weiterhin vorteilhaft, wenn für eine laufende Anpassung der digitalen Komponentenmodelle Lern-Algorithmen verwendet werden oder ein Verhalten der zumindest zwei verbundenen Netzwerke herangezogen wird. Dadurch können die digitalen Komponentenmodelle dynamisch verfeinert werden und beispielsweise Wechselwirkungen durch z.B. Anwendungen bzw. Applikationen zwischen den zumindest zwei verbundenen Netzwerken noch besser bei der Konfigurationsänderung berücksichtigt werden.

Eine zweckmäßige Ausgestaltung des erfindungsgemäßen Verfahrens sieht vor, dass eine Netzwerkanalyse von zumindest einem der zumindest zwei Netzwerke automatisch oder zumindest teilweise automatisch durchgeführt wird. Insbesondere bei Netzwerken, bei welchen häufiger Topologie-Änderungen auftreten - wie z.B. bei einem Kommunikationsnetz, kann durch zumindest teilweise automatisch durchgeführte Netzwerkanalysen verhindert werden, dass ein verfälschtes oder fehlerhaftes, digitales Modell erstellt und für den Ablauf der Konfigurationsänderung herangezogen wird. Bei kleinen und/oder Netzwerken mit einer z.B. gut dokumentierten oder eher statischen Netzwerktopologie (z.B. Energieversorgungsnetz, Fertigungsanlagen, etc.) kann das entsprechende digitale Modell z.B. auch manuell gepflegt bzw. an Änderungen angepasst werden. Weiterhin bringt die Verwendung von automatisch oder zumindest teilweise automatisch durchgeführten Netzanalysen als Basis für das jeweilige digitale Netzwerkmodell den Vorteil, dass rasch und dynamisch auf Veränderungen in der Topologie (z.B. bei Ausfall von Leitungen bzw. Verbindungen, Veränderung von Routen im Kommunikationsnetz, etc.) reagiert werden kann.

Bei einer bevorzugten Weiterbildung des erfindungsgemäßen Verfahrens wird als zumindest eines der zumindest zwei Netzwerke ein Energieversorgungsnetz oder ein Fertigungssystem oder ein Gebäudemanagementsystem vorgesehen.

### Kurzbeschreibung der Zeichnung

Die Erfindung wird nachfolgend in beispielhafter Weise anhand der beigefügten Figuren erläutert. Es zeigen:
Figur 1 einen beispielhaften Ablauf des erfindungsgemäßen Verfahrens zur Konfigurationsänderung von verbundenen Netzwerken;
Figur 2 eine beispielhafte Anwendung des erfindungsgemäßen Verfahrens in einem Energieversorgungsnetz, welches über Komponenten mit einem Kommunikationsnetzwerk verbunden ist;
Figur 3 eine beispielhafte Anwendung des erfindungsgemäßen Verfahrens bei einer Fertigungsanlage, welches über Komponenten mit einem Kommunikationsnetzwerk verbunden ist.

### Ausführung der Erfindung

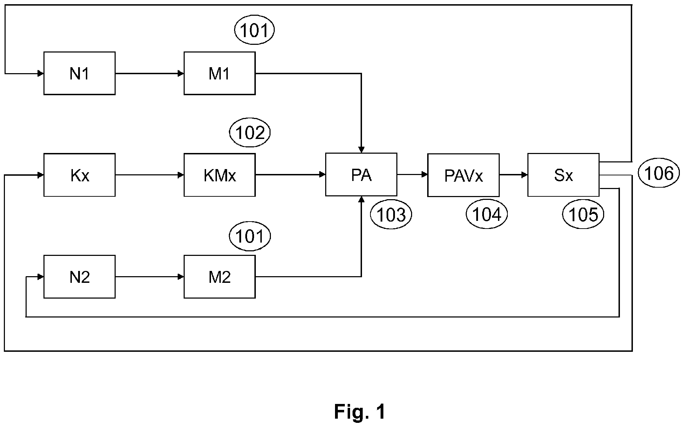

Figur 1 zeigt beispielhaft und schematisch einen Ablauf des Verfahrens zur Konfigurationsänderung in zumindest zwei verbundenen Netzwerken N1, N2, wobei eines der zumindest zwei Netzwerke N1, N2 - beispielsweise ein erstes Netzwerk N1 - als Kommunikationsnetz ausgeführt ist. Das zumindest zweite Netzwerk N2 kann beispielsweise als Energieversorgungsnetz, Fertigungssystem oder -anlage oder als Gebäudemanagementsystem ausgeführt sein. Die zumindest zwei Netzwerke N1, N2 bestehen dabei aus Komponenten. So kann beispielsweise das als Kommunikationsnetz ausgestaltete, erste Netzwerk N1 Komponenten wie z.B. Rechnereinheiten, Routern, Switches, Zugangseinheiten, IP-Endgeräten, etc. sowie entsprechende Verbindungen (z.B. Kabel, Glasfaser, Verbinder, drahtlose Kommunikationsverbindungen, etc.) umfassen. Das zumindest zweite Netzwerk N2 weist je nach seiner Ausführung (z.B. Energieversorgungsnetz, Fertigungssystem, Gebäudemanagementsystem, etc.) entsprechende physikalische Einheiten (z.B. Verbraucher, Erzeuger, Zählereinheiten, Messeinrichtungen, Transformatorstationen, Stromleitungen, Fertigungseinheiten, Fertigungsstationen, Sensoren, Aktuatoren, etc.) als Netzwerkkomponenten auf. Die zumindest zwei Netzwerke N1, N2 sind dabei zumindest über eine Komponente Kx miteinander verbunden.

Für das Verfahren zur Konfigurationsänderung der zumindest zwei verbundenen Netzwerk N1, N2 werden in einem Netzmodellierungsschritt 101 digitale Modelle M1, M2 der zumindest zwei Netzwerke N1, N2 auf Basis von Netzwerkanalysen erstellt. Die Netzwerkanalyse von den zumindest zwei Netzwerken N1, N2 kann automatisch oder zumindest teilweise automatisch durchgeführt werden. Bei der Netzwerkanalyse wird automatisch oder teilweise automatisch und dynamisch eine Topologie des jeweiligen Netzwerks N1, N2 aus Basis für das jeweilige digitale Modell M1, M2 analysiert. Bei einfachen (d.h. mit wenigen Komponenten und/oder Änderungen) und/oder gut dokumentierten Netzwerken N1, N2 kann eine Analyse sowie das Erstellen und Verwalten des Netzwerkmodells M1, M2 gegebenenfalls auch manuell vorgenommen werden. Ein Erstellen der Netzwerkmodell M1, M2 im Netzmodellierungsschritt 101 kann unabhängig voneinander und asynchron, aber auch parallel zueinander erfolgen.

In einem Komponentenmodellierungsschritt 102 werden digitale Komponentenmodelle KMx für die zumindest eine Komponente Kx erstellt, über welche die zumindest zwei Netzwerke N1, N2 verbunden sind. Dabei wird in einem jeweiligen Komponentenmodell KMx zumindest eine jeweilige Interaktion der zumindest einen verbindenden Komponente Kx abgebildet. Die jeweilige Interaktion kann beispielsweise mittels Eigenschaften der beiden Netzwerke N1, N2 oder von Teil-Komponenten beschrieben werden. Falls auf der verbindenden Komponente Kx eine Anwendung bzw. Applikation abläuft, welche Einfluss auf die zumindest zwei Netzwerke N1, N2 aufweist, so kann auch ein Verhalten dieser Anwendung bzw. Applikation explizit modelliert werden. Komponentenmodelle KMx können dabei beispielsweise aus einem Verhalten der zumindest zwei verbundenen Netzwerke N1, N2 erlernt werden oder z.B. durch Anwendung von Lernalgorithmen verfeinert werden.

In einem Ablauferstellungsschritt 103 wird auf Basis der digitalen Modelle M1, M2 der zumindest zwei Netzwerke N1, N2 und der digitalen Komponentenmodelle KMx der zumindest einen verbindenden Komponente Kx ein Ablauf PA der Konfigurationsänderung erstellt. Der Ablauf PA der Konfigurationsänderung wird dabei als zeitlich und örtlich dezentral steuerbare Struktur erstellt, wobei vom Ablauf PA in den Modellen M1, M2, KMx vorgegebene Bedingungen erfüllt werden müssen. Derartig Bedingungen sind z.B. Vorgaben betreffend Netzauslastungen, Abhängigkeiten von Netzkomponenten und/oder Anwendungen, etc. Durch den Ablauf PA der Konfigurationsänderung wird im Prinzip vorgegeben, zu welchem Zeitpunkt, auf welchen Komponenten, welcher Schritt der Konfigurationsänderung durchgeführt wird. Weiterhin kann dadurch im Fehlerfall eine Konfigurationsänderung sehr einfach in einen Ausgangszustand zurückgesetzt werden.

Ein Erstellen der digitalen Modelle M1, M2, KMx der zumindest zwei Netzwerke N1, N2 und der zumindest einen verbindenden Komponente Kx im Netzmodellierungsschritt 101 bzw. im Komponentenmodellierungsschritt 102 sowie ein Ableiten des Ablaufs PA der Konfigurationsänderung im Ablauferstellungsschritt 103 kann beispielsweise zentral durchgeführt werden. Der Ablauf PA der Konfigurationsänderung sowie die digitalen Modelle M1, M2, KMx können dabei zentral erstellt, gespeichert und verwaltet werden. Dazu kann beispielsweise eine in einem der zumindest zwei Netzwerke N1, N2 vorhandene zentrale Steuerkomponente genutzt werden, welche z.B. im ersten, als Kommunikationsnetz ausgeführten Netzwerk N1 vorhanden ist.

Alternativ kann das Erstellen der digitalen Modelle M1, M2, KMx im Netzmodellierungsschritt 101 bzw. im Komponentenmodellierungsschritt 102 sowie das Ableiten der Ablaufs PA der Konfigurationsänderung im Ablauferstellungsschritt 103 auch dezentral mittels kommunizierender Netzwerkeinheiten durchgeführt werden. D.h. der Ablauf PA der Konfigurationsänderung wird dezentral in einem der zumindest zwei Netzwerke N1, N2, insbesondere im Kommunikationsnetz N1, erstellt, gespeichert und verwaltet.

In einem Zerlegungsschritt 104 wird der Ablauf PA der Konfigurationsänderung in dezentral durchführbare Ablaufeinheiten PAVx zerlegt. In einem Ausführungsschritt 105 werden die Ablaufeinheiten PAVx bzw. eine Kontrolle über die Ablaufeinheiten PAVx auf zumindest eine - üblicherweise - mehrere Ablaufsteuereinheiten Sx verteilt. Die Ablaufsteuereinheiten Sx sind - insbesondere im ersten, als Kommunikationsnetz ausgestalteten Netzwerk N1 - dezentral beispielsweise in Abhängigkeit von der jeweiligen Konfigurationsänderung - z.B. in örtlicher Nähe von zu ändernden Komponenten, etc. - angeordnet. Als Ablaufsteuereinheiten Sx können beispielsweise eine einzelne Komponente (z.B. bei kleinen Netzen N1, N2 und/oder nur sehr lokalen Änderungen) oder mehrere Komponenten vorgegeben oder anhand des Ablaufs PA dynamisch ausgewählt werden. Dabei können als Ablaufsteuereinheiten Sx z.B. Komponenten Kx vorgegeben oder dynamisch ausgewählt werden, welcher über einen Steuerfunktionalität zum Durchführen der Ablaufeinheiten PAVx verfügen. Alternativ können auch beliebige Komponenten Kx - insbesondere in Abhängigkeit vom Ablauf PA der Konfigurationsänderung (z.B aufgrund räumlicher Gegebenheiten im Netz, etc.) ausgewählt werden und im Ausführungsschritt 105 mit der entsprechenden Steuerfunktionalität ausgestattet werden, um als Ablaufsteuereinheit Sx fungieren zu können.

Mit Hilfe der Ablaufsteuereinheiten Sx wird der Ablauf PA der Konfigurationsänderung bzw. die Ablaufeinheiten PAVx räumlich und zeitlich in zumindest einem der Netzwerken N1, N2 verteilt. Ist eine zentrale Erstellung des Ablaufs PA durch eine zentrale Steuerkomponente vorgesehen, so kann die Verteilung bzw. Übertragung der dezentral durchführbaren Ablaufeinheiten PAVx auf die Ablaufsteuereinheiten Sx und die durch die zentrale Steuerkomponente durchgeführt werden. Gegebenfalls kann die zentrale Steuerkomponente auch eine Ausstattung von Komponenten Kx mit der Steuerfunktionalität übernehmen.

Nach der Verteilung werden die dezentral durchführbaren Ablaufeinheiten PAVx unter Berücksichtigung von zeitlichen Abhängigkeiten und/oder Vorgaben auf den vorgegebenen, dezentralen Ablaufsteuereinheiten Sx im Ausführungsschritt 105 ausgeführt. Die Ablaufsteuereinheiten Sx werden damit zu einer Art Proxy-Server für die jeweilige Ablaufeinheit PAVx bzw. einen Teil des Ablaufs PA der Konfigurationsänderung, welcher durch die jeweilige Ablaufeinheit PAVx festgelegt wird, wodurch ein Netzwerkverkehr - insbesondere im Kommunikationsnetz N1 - reduziert werden kann.

In einem Optimierungsschritt 106 können die digitalen Modelle M1, M2 der zumindest zwei Netzwerke N1, N2 und/oder die digitalen Komponentenmodelle Kx laufend angepasst werden. Als Basis dazu kann eine Ausführung der jeweiligen dezentral durchführbaren Ablaufeinheiten PAVx herangezogen werden. Für eine laufende Anpassung - vor allem der digitalen Komponentenmodelle KMx können beispielsweise Lernalgorithmen verwendet oder ein Verhalten der zumindest zwei verbundenen Netzwerke N1, N2 herangezogen werden. Die dynamische Optimierung des Ablaufes PA wird dann in der Folge von der zumindest einen Ablaufsteuereinheit Sx berücksichtigt. Dabei können die dezentralen, vorgebbaren Ablaufsteuereinheiten Sx selbst Ziel einer Konfigurationsänderung sein. Da die Ablaufsteuereinheiten Sx nur in einem der zumindest zwei Netzwerke N1, N2 - meist im ersten, als Kommunikationsnetz ausgeführten Netzwerk N1 - angeordnet sind, sind in ihrer Modellierung beispielsweise nur Interaktionen bzw. Auswirkungen auf dieses jeweilige Netzwerk N1, N2 (z.B. das Kommunikationsnetz) integriert. Üblicherweise weisen die Ablaufsteuereinheiten Sx keine Verbindung zum zumindest zweiten Netzwerk N2 auf.

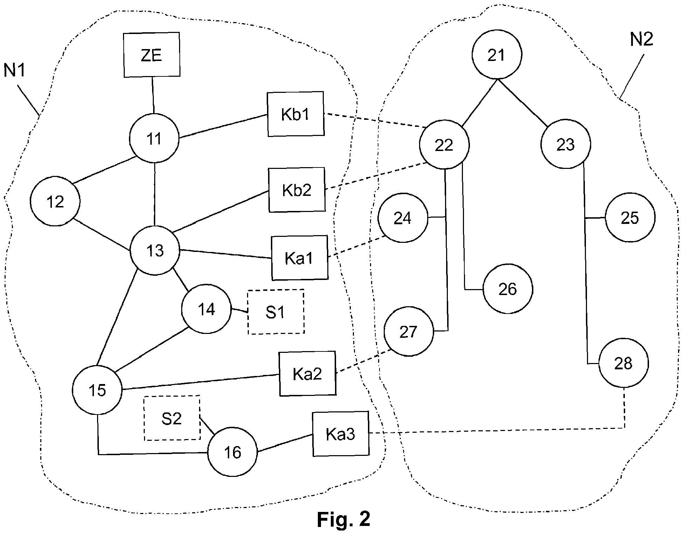

In Figur 2 ist eine beispielhafte Anwendung des erfindungsgemäßen Verfahrens zur Konfigurationsänderung von zwei verbundenen Netzwerken N1, N2 abgebildet. Ein erstes Netzwerk N1 ist dabei als Kommunikationsnetz ausgeführt. Das Kommunikationsnetz N1 weist mehrere Komponenten 11 bis 16, Ka1, Ka2, Ka3, Kb1, Kb2 (z.B. Rechnereinheit, Router, Switches, etc.) auf. Weiterhin umfasst das Kommunikationsnetz N1 eine zentrale Steuerkomponente ZE für eine Steuerung, Kontrolle und Überwachung eines Status der Komponenten 11 bis 16, Ka1, Ka2, Ka3, Kb1, Kb2 und Prozesse im Kommunikationsnetz N1. Ein zweites Netzwerk N2 ist ein Energieversorgungsnetz, welches ebenfalls aus mehreren Komponenten 21 bis 28 (z.B. Verbraucher, Erzeuger, Zählereinheiten, Messeinrichtungen, Transformatorstationen, Stromleitungen, etc.) besteht.

Die beiden Netzwerke sind über die verbindenden Komponenten Ka1, Ka2, Ka3, Kb1, Kb2 des Kommunikationsnetzes N1 miteinander verbunden. Diese Komponenten Ka1, Ka2, Ka3, Kb1, Kb2 können beispielsweise als Rechnereinheiten ausgeführt sein, auf welchen unterschiedliche Anwendung ablaufen. D.h. es können damit unterschiedliche Typen von verbindenden Komponenten Ka1, Ka2, Ka3, Kb1, Kb2 vorgesehen sein. Von einem ersten Komponententyp Ka1, Ka2, Ka3 wird z.B. eine erste Anwendung zum Aufnehmen, Speichern und Weiterleiten von Messwerten auf dem Energieversorgungsnetz N2 durchgeführt. Von einem zweiten Komponententyp Kb1, Kb2 wird beispielsweise eine zweite Anwendung ausgeführt, durch welche Komponenten 21 bis 28 des zweiten Netzwerkes N2 mittels Steuerbefehlen kontrolliert und gesteuert werden.

Soll nun in einem der verbundenen Netzwerken N1, N2 eine Konfigurationsänderung durchgeführt werden - wie z.B. eine Installation einer neuen Anwendung oder einer neuen Version einer Anwendung auf den Komponenten Ka1, Ka2, Ka3 des ersten Typs im Kommunikationsnetz N1, so kann diese Konfigurationsänderung auch das zweite Netzwerk N2 bzw. das Energieversorgungsnetz N2 beeinflussen bzw. zumindest Einfluss auf jene Komponenten 24, 27, 28 haben, welche mit den von der Konfigurationsänderung betroffenen Komponenten Ka1, Ka2, Ka3 verbunden sind. Es kann beispielsweise ein Energieverbrauch in den entsprechenden Komponenten 24, 27, 28 der Energieversorgungsnetzes N2 beeinflusst werden. Es wird daher für die Konfigurationsänderung das erfindungsgemäße Verfahren zur Konfigurationsänderung von verbundenen Netzwerken N1, N2 durchlaufen.

Es werden daher im Netzmodellierungsschritt 101 automatisch digitale Modelle M1, M2 der beiden Netzwerke N1, N2 erstellt bzw. entsprechende digitale Modelle M1, M2 angepasst, falls von einer früheren Konfigurationsänderung bereits digitale Modelle M1, M2 vorhanden sind. Weiterhin werden im Komponentenmodellierungsschritt 102 die digitalen Komponentenmodelle KMx erstellt bzw. gegebenenfalls angepasst. Von den digitalen Modellen M1, M2 der Netzwerke N1, N2 und von den Komponentenmodellen KMx werden dabei z.B. eine Netzwerkstruktur und - topologie sowie die enthaltenen Komponenten des jeweiligen Netzwerks N1, N2 und ihrer Eigenschaften wiedergegeben. Beim Kommunikationsnetz N1 betrifft dies beispielsweise Komponenten wie z.B. Router sowie die verbindenden Komponenten Ka1, Ka2, Ka3, Kb1, Kb2 sowie Eigenschaften wie z.B. Datenübertragungsrouten, Übertragungskapazitäten, genutzte Protokolle, Datensendefrequenzen, Übertragungsraten, etc. Beim Energieversorgungsnetz N2 können Komponenten wie z.B. Verbraucher, Umspannwerke, Erzeuger, Stromleitungen sowie Anbindungen der verbindenden Komponenten Ka1, Ka2, Ka3, Kb1, Kb2 an das Energieversorgungsnetz N2 oder Eigenschaften wie z.B. Leitungskapazitäten, Umschaltmöglichkeiten, etc. in den Modellen M2, KMx abgebildet werden.

Die Erstellung und Verwaltung der digitalen Modelle M1, M2 sowie der Komponentenmodelle KMx kann beispielsweise von der zentralen Steuerkomponenten ZE übernommen werden.

Weiterhin werden im Kommunikationsnetz N1 dezentral angeordnete Ablaufsteuereinheiten S1, S2 vorgegeben. Als Ablaufsteuereinheit S1, S2 können beispielsweise im Kommunikationsnetz existierende Komponenten 11 bis 16, Ka1, Ka2, Ka3, Kb1, Kb2 - insbesondere verbindende Komponenten Ka1, Ka2, Ka3, Kb1, Kb2 - eingesetzt werden, welche idealerweise eine Steuerfunktionalität aufweisen. Dabei kann z.B. die Funktion der Ablaufsteuereinheit S1, S2 bzw. die Steuerfunktionalität in die jeweilige Komponente 11 bis 16, Ka1, Ka2, Ka3, Kb1, Kb2 z.B. in Form einer Applikation integriert werden. Diese Integration kann auch nach Erstellung des Ablaufs PA der Konfiguration aus diesem Ablauf PA abgeleitet und in Ausführungsschritt 105 dynamisch durchgeführt werden. Alternativ oder zusätzlich können neue Komponenten z.B. als dezidierte, dezentrale Ablaufsteuereinheiten S1, S2 - wie beispielhaft in Figur 2 dargestellt - installiert werden, wobei z.B. eigene physikalische Einheiten für die jeweilige Ablaufsteuereinheit S1, S2 verwendet werden.

Im Ablauferstellungsschritt 103 wird dann auf Basis der digitalen Modelle M1, M2 der Netzwerke N1, N2 und der Komponentenmodelle KMx der Ablauf PA der Konfigurationsänderung erstellt. Der Ablauf PA kann dabei in der zentralen Steuerkomponente ZE erstellt und verwaltet werden und von dort nach dem Zerlegungsschritt 104 in Form der Ablaufeinheiten PAVx auf die im Kommunikationsnetz N1 vorgegebenen Ablaufsteuereinheiten S1, S2 verteilt werden. Alternativ kann - insbesondere bei fehlernder zentraler Steuerkomponente ZE - der Ablauf PA der Konfigurationsänderung als koordinierte, verteilte Rechenoperation in den vorgegebenen, dezentralen Ablaufsteuereinheiten S1, S2 selbst erstellt und verwaltet werden. Es ist allerdings auch eine Kombination aus zentraler Erstellung des Ablaufs PA der Konfigurationsänderung in der zentralen Steuerkomponenten ZE und einer dezentralen Optimierung des Ablaufs während des Optimierungsschritts 106 in den Ablaufsteuereinheiten S1, S2 denkbar.

Bei der automatischen Ermittlung des Ablaufs PA der Konfigurationsänderung kann beispielsweise bei der in Figur 2 beispielhaft dargestellten Anwendung des erfindungsgemäßen Verfahrens auf Basis der Modelle M1, M2 der Netzwerke N1, N2 und der Komponentenmodelle KMx im Ablauferstellungsschritt 103 festgestellt werden:
- dass sich eine Auswirkung der Konfigurationsänderung in den Komponenten Ka1, Ka2, Ka3 der aufgrund der in den Komponentenmodellen KMx beschriebenen Eigenschaften der Interaktionen durch die neue Anwendung bzw. neue Version einer Anwendung z.B. die Komponenten 24, 27, 28 und deren jeweilige Verbindungen im Energieversorgungsnetzwerk N2 auswirken wird, wobei gegebenenfalls auch die Komponente 26 und deren jeweilige Verbindung betroffen sein kann; und
- dass weiterhin im Kommunikationsnetz N1 der von der Konfigurationsänderung betroffene Bereich in Sub-Bereich unterteilen werden können - d.h. es kann beispielsweise ein erster Sub-Bereich gebildet werden, welche Auswirkungen auf die Komponenten 24, 26, 27 und ihre Verbindungen des Energieversorgungsnetz N2 umfasst, und ein zweiter Sub-Bereich, welcher die Auswirkungen auf die Komponente 28 und ihre Verbindungen im Energieversorgungsnetz N2 berücksichtigt. Dabei kann z.B. für den ersten Sub-Bereich eine erste Ablaufsteuereinheit S1 und für den zweiten Sub-Bereich eine zweite Ablaufsteuereinheit S2 vorgegeben werden oder anhand des Ablaufs PA der Konfigurationsänderung dynamisch ausgewählt werden.

D.h. aus den Modellen M1, M2, KMx ergibt sich im Ablauferstellungsschritt 103 beispielsweise in Bezug auf das Energieversorgungsnetz N2, dass es aus dessen Sicht sinnvoll wäre, die Konfigurationsänderung - d.h. die Installation der Anwendung - im kleineren, zweiten Sub-Bereich, welcher weniger Komponenten betrifft, zu starten, für welchen z.B. die zweite Ablaufsteuereinheit S2 eingesetzt werden kann. Erst nach einer erfolgreichen Durchführung im zweiten Sub-Bereich könnte die Konfigurationsänderung z.B. auch im ersten Sub-Bereich mittels der ersten Ablaufsteuereinheit S1 durchgeführt werden, in welchem wesentlich mehr Komponenten betroffen sind.

Weiterhin können im Ablauferstellungsschritt 103 auf Basis der digitalen Modelle M1, M2 der Netzwerke N1, N2 und der digitalen Komponentenmodelle auch die Auswirkungen der Konfigurationsänderung auf das erste Netzwerk N1 bzw. das Kommunikationsnetz N1 selbst berücksichtigt werden - wie z.B. zusätzlichen Datenverkehr oder zeitlich verändertes Verhalten beim Datentransfer (z.B. so genannter Bulk-Transfer statt kontinuierlicher Datentransfer). Diese Auswirkungen umfassen z.B. eine Übertragung der neuen Anwendung auf die jeweiligen Komponenten Ka1, Ka2, Ka3, bei zentraler Erstellung des Ablaufes AP eine Verteilung der Ablaufeinheiten PAVx auf die Ablaufsteuereinheiten S1, S2, etc. Um beispielsweise den Datenverkehr im Kommunikationsnetz N1 gering zu halten, kann z.B. im Ablauf AP der Konfigurationsänderung eingeplant werden, die neue Anwendung bzw. die neue Version der Anwendung zuerst auf die Ablaufsteuereinheiten S1, S2 zu übertragen, um die Anzahl der Komponenten 11 bis 16, Ka1, Ka2, Ka3, Kb1, Kb2 im Kommunikationsnetz N1, die durch die Konfigurationsänderung beeinflusst werden, möglichst gering zu halten.

Damit ergibt sich beispielsweise für das in Figur 2 dargestellte Beispiel des erfindungsgemäßen Verfahrens im Ablauferstellungsschritt 103 ein Ablauf AP für die Konfigurationsänderung bzw. die Installation einer neuen Anwendung oder Anwendungsversion auf den Komponenten Ka1, Ka2, Ka3, welcher beispielsweise im Zerlegungsschritt 104 in mehrere dezentral durchführbare Ablaufeinheiten PAVx zerlegt werden kann, welche in einem zeitlichen Zusammenhang zueinander stehen. Der Ablauf AP der Konfigurationsänderung könnte z.B. wie folgt aussehen:
- Übertragen der neuen Anwendung auf die erste Ablaufsteuereinheit S1 z.B. von der zentralen Steuerkomponente ZE ausgeführt;
- Übertragen der neuen Anwendung auf die zweite Ablaufsteuereinheit S2 z.B. von der zentralen Steuerkomponente ZE ausgeführt;
- Übertragen einer ersten Ablaufeinheit PAV1 an die erste Ablaufsteuereinheit S1 z.B. durch die zentrale Steuerkomponente ZE, wobei die erste Ablaufeinheit z.B. mehrere Schritte wie z.B. Warten auf Anstoß durch die zentrale Steuerkomponente ZE, Installieren der neuen Anwendung bzw. Anwendungsversion auf den Komponenten Ka1, Ka2 und Rückmeldung über Installationserfolg (z.B. mittel Validierung gegenüber einem Modell) an z.B. die anstoßenden, zentrale Steuerkomponente ZE aufweisen kann;
- Übertragen einer zweiten Ablaufeinheit PAV2 an die zweiten Ablaufsteuereinheit S2 z.B. durch die zentrale Steuerkomponente ZE, wobei die zweite Ablaufeinheit PAV2 ebenfalls mehrere Schritte wie z.B. Warten auf einen externen Anstoß, Installieren der neuen Anwendung bzw. Anwendungsversion auf der Komponente Ka3, Anstoßen der ersten Ablaufeinheit PAV1 auf der ersten Ablaufsteuereinheit S1 bei erfolgreicher Installation und Rückmeldung über Installationserfolg an anstoßende Komponente (z.B. zentrale Steuerkomponente ZE);
- Anstoßen der Ausführung der zweiten Ablaufeinheit PAV2 auf der zweiten Ablaufsteuereinheit S2 durch z.B. die zentrale Steuerkomponente ZE.

Der oben beispielhaft beschriebene Ablauf PA der Konfigurationsänderung kann z.B. mittels externen Anstoßes über die zentrale Steuerkomponente ZE - z.B. Start der Anwendungsinstallation im Kommunikationsnetz - im Ausführungsschritt 105 gestartet und dann entsprechend durchlaufen werden, wobei die zentrale Steuerkomponente ZE teilweise auch die Funktion einer Ablaufsteuereinheit Sx - insbesondere für die Übertragungsvorgänge - übernimmt. Die Ablaufeinheiten PAVx des Ablaufes PA der Konfigurationsänderung werden dann dezentral auf den Ablaufsteuereinheiten S1, S2 entsprechend der vorgegebenen zeitlichen Abhängigkeiten - z.B. zweite Ablaufeinheit PAV2 vor der ersten Ablaufeinheit PAV1 - ausgeführt.

Der beispielhaft anhand von Figur 2 beschriebene Ablauf PA der Konfigurationsänderung ist relativ einfach gehalten, kann aber beispielsweise beliebig komplexer gestaltet werden. Es kann z.B. eine Validierung des Installationserfolgs durch Modelle im Standby-Betrieb mit einer alten Version der Anwendung erfolgen oder der Ablauf PA oder die Durchführung der Ablaufeinheiten PAVx zeitlich überwacht werden sollen oder ein sogenanntes Rollback des Ablaufs PA mitberücksichtigt wird.

In einem Optimierungsschritt 106 können die digitalen Modelle M1, M2 der zumindest zwei Netzwerke N1, N2 und/oder die digitalen Komponentenmodelle Kx sowie der Ablauf AP der Konfigurationsänderung laufend angepasst werden.

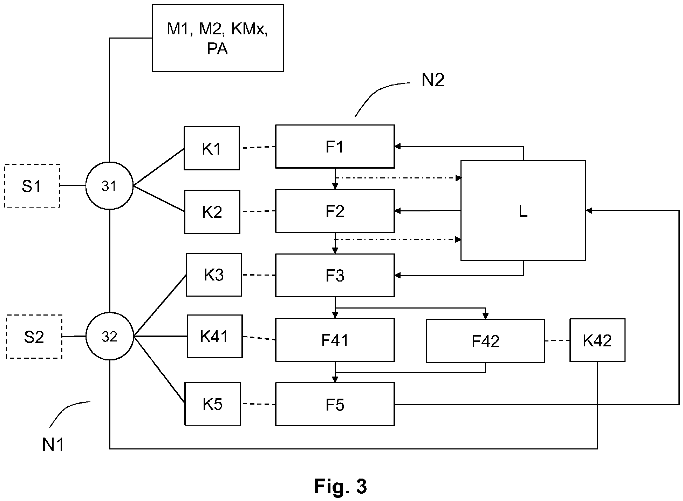

In Figur 3 ist eine weitere, beispielhafte Anwendung des erfindungsgemäßen Verfahrens zur Konfigurationsänderung von zwei verbundenen Netzwerken N1, N2 dargestellt. Dabei ist das erste Netzwerk N1 wieder ein Kommunikationsnetz, welches aus den Komponenten 31, 32, K1, K2, K3, K41, K41, K5 besteht. Weiterhin können dezentrale Ablaufsteuereinheiten S1, S2 im Kommunikationsnetz N1 vorgesehen sein, welche z.B. von eigenen Rechnereinheiten gebildet werden und z.B. für eine Konfigurationsänderung im Kommunikationsnetz installiert werden.

Das zweite Netzwerk N2 wird in der in Figur 3 beispielhaft und schematisch dargestellten Anwendung von Fertigungskomponenten F1, F2, F3, F41, F42, F5 einer Fertigungsanlage mit einem Lager L gebildet, aus welchen z.B. Material bezogen wird bzw. in welchem fertige Produkte abgelegt werden. Weiterhin ist z.B. eine Komponente F41, F42 der Fertigungskomponenten F1, F2, F3, F41, F42, F5 redundant ausgeführt. Die einzelnen Fertigungskomponenten F1, F2, F3, F41, F42, F5 der Fertigungsanlage N2 sind über die verbindenden Komponenten K1, K2, K3, K41, K41, K5 des Kommunikationsnetzes N1 mit dem Kommunikationsnetz N1 verbunden, wobei die verbindenden Komponenten K1, K2, K3, K41, K42, K5 Funktions- bzw. Software-Komponenten von jeweiligen Fertigungskomponenten sind. Weiterhin kann im Kommunikationsnetz N1 eine zentrale Einheit vorgesehen sein, in welcher die digitalen Modelle M1, M2 der beiden Netzwerke N1, N2, die digitalen Komponentenmodelle KMx, der Ablauf PA einer Konfigurationsänderung erstellt und verwaltet sowie eine zentrale Prozess-Ablauf-Kontrolle durchgeführt wird.

Wenn in einer verbindenden Komponente K5, welcher einer Fertigungskomponente F5 zugeordnet ist, beispielsweise eine Aktualisierung aus Sicherheitsgründen oder eine Fehlerbehebung durchgeführt werden muss, so kann mittels des erfindungsgemäßen Verfahrens zur Konfigurationsänderung wieder ein dezentral durchführbarer und zeitlich optimierter Ablauf PA der Konfigurationsänderung erstellt werden. Dazu werden im Netzmodellierungsschritt 101 und im Komponentenmodellierungsschritt 102 wieder die entsprechenden digitalen Modelle M1, M2 der Netzwerke N1, N2 sowie die Komponentenmodelle KMx der verbindenden Komponenten K1, K2, K3, K3, K41, K42, K5 erstellt. Dabei können beispielsweise die Komponenten F1, F2, F3, F41, F42, F5 der Fertigungsanlage N2, die Komponenten 31, 32, K1, K2, K3, K41, K41, K5 im Kommunikationsnetz N1 sowie als Verbindung zur Fertigungsanlage N2, die Topologie des Kommunikationsnetzes N1 sowie Fertigungsabläufe z.B. als Teil der Topologie der Fertigungsanlage N2 modelliert werden. Auf Basis der Modelle M1, M2, KMx können dann Auswirkungen von Konfigurationsänderungen in beiden Netzwerken N1, N2 analysiert werden.

Im Ablauferstellungsschritt 103 wird dann ein Ablauf PA für die Konfigurationsänderung z.B. der Komponente K5 des Kommunikationsnetzes N1 auf Basis der erstellten Modelle M1, M2 der Netzwerke N1, N2 und der Komponentenmodelle KMx ermittelt. Von diesem Ablauf PA werden dann die Bedingungen für eine möglichst reibungslose, kontinuierliche Fertigung dadurch erfüllt, dass z.B. zuerst ein Fertigungsablauf durch Re-Konfiguration der Anlage um die aktualisierende Komponente K5 bzw. die zugehörige Fertigungskomponente F5 herumgeleitet wird oder z.B. ein Zwischenlager L aktiviert wird.

Durch die Zerlegung des Ablaufs PA in dezentral durchführbare Ablaufeinheiten PAVx im Zerlegungsschritt 104 können die dezentralen Ablaufeinheiten PAVx und damit eine Kontrolle der Konfigurationsänderung im Kommunikationsnetz N1 derart platziert werden, dass der Ablauf und eine gegebenenfalls notwendige Rückabwicklung auf einen möglichst kleinen Bereich des Kommunikationsnetzes beschränkt bleibt und eine operative Kommunikation im restlichen System - Kommunikationsnetz N1 und Fertigungsanlage N2 möglichst nicht beeinflusst.

Um die Beeinflussung der Netzwerke N1, N2 gering zu halten, kann beispielsweise die Aktualisierung der Komponente K5 bzw. die neue Version für die Komponente K5 im Ausführungsschritt 105 an die Ablaufsteuereinheit S2 ausgelagert werden. Weiterhin kann im Ablauf PA die Redundanz von Komponente F41, F42 der Fertigungsanlage N2 berücksichtigt werden. Dazu kann im Zerlegungsschritt 104 der Ablauf PA der Konfigurationsänderung zeitlich derart zerteilt werden, dass beispielsweise die den redundant vorhandenen Fertigungskomponenten F41, F42 zugeordneten Komponenten K41, K42 des Kommunikationsnetzes N1 im Ausführungsschritt 105 nacheinander aktualisiert werden, um die Bedingung eines kontinuierlichen Fertigungsprozesses zu erfüllen.

Die Optimierungen des Ablaufs PA der Konfigurationsänderung, welche anhand von Figur 3 beispielhaft beschrieben werden, werden durch das erfindungsgemäße Verfahren bei der Erstelllung des Ablaufs PA der Konfigurationsänderungen auf Basis der digitalen Modelle M1, M2 der Netzwerke N1, N2 sowie der digitalen Komponentenmodelle KMx automatisch berücksichtigt, ohne dass beispielsweise ein Benutzer manuell in den Ablaufplanungsprozess eingreifen muss.

## Patentansprüche

1. Verfahren zur Konfigurationsänderung von verbundenen Netzwerken (N1, N2), wobei zumindest zwei, aus Komponenten (11, ..., 16; 21, ..., 28) bestehende Netzwerke (N1, N2) über zumindest einen verbindende Komponente (Kx) verbunden sind, und wobei zumindest eines der zumindest zwei Netzwerke (N1, N2) ein Kommunikationsnetz ist, mit folgenden Schritten:
- Erstellen (101) von digitalen Modellen (M1, M2) der zumindest zwei Netzwerke (N1, N2) auf Basis von Netzwerkanalysen;
- Erstellen (102) von digitalen Komponentenmodellen (KMx) für die zumindest eine verbindende Komponente (Kx), wobei in einem jeweiligen digitalen Komponentenmodell (KMx) zumindest eine jeweilige Interaktion der zumindest einen verbindenden Komponente (Kx) mittels Eigenschaften eines der zumindest zwei Netzwerke (N1, N2) abgebildet wird;
- Ableiten (103) eines Ablaufs (PA) der Konfigurationsänderung auf Basis der digitalen Modelle (M1, M2) der zumindest zwei Netzwerke (N1, N2) und der digitalen Komponentenmodelle (KMx) für die zumindest eine verbindende Komponente (Kx);
- Zerlegen (104) des Ablaufs (PA) der Konfigurationsänderung in dezentral durchführbare Ablaufeinheiten (PAVx); und
- Verteilen wie Durchführen (105) der dezentral durchführbaren Ablaufeinheiten (PAVx) unter Berücksichtigung von zeitlichen und räumlichen Abhängigkeiten auf zumindest einer dezentrale Ablaufsteuereinheit (Sx) in zumindest einem der zumindest zwei Netzwerke (N1, N2).

2. Verfahren nach Anspruch 1, ***dadurch gekennzeichnet, dass*** auf Basis der Durchführung der dezentral durchführbaren Ablaufeinheiten (PAVx) die digitalen Modelle (M1, M2) der zumindest zwei Netzwerke (N1, N2) und/oder die digitalen Komponentenmodelle (Kx) laufend angepasst werden (106).

3. Verfahren nach einem der vorangegangenen Ansprüche, **da*durch gekennzeichnet, dass*** als zumindest eine dezentrale Ablaufsteuereinheit (Sx) zumindest eine Komponente (Kx) in einem der zumindest zwei Netzwerke (N1, N2) vorgegeben wird oder zumindest eine Komponente in einem der zumindest zwei Netzwerke (N1, N2) anhand des Ablaufs (PA) der Konfigurationsänderung dynamisch ausgewählt wird (105).

4. Verfahren nach einem der vorangegangenen Ansprüche, **dadurch gekennzeichnet, dass** für die zumindest eine dezentrale Ablaufsteuereinheit (Sx) eine Komponente (Kx) verwendet wird, von welcher eine Steuerfunktionalität aufgewiesen wird oder welche anhand des Ablaufs (PA) der Konfigurationsänderung dynamisch mit der Steuerfunktionalität ausgestattet wird (105).

5. Verfahren nach einem der vorangegangenen Ansprüche, **da*durch gekennzeichnet, dass*** der Ablauf (PA) der Konfigurationsänderung als zeitlich und örtlich dezentral steuerbare Struktur erstellt wird (103).

6. Verfahren nach einem der vorangegangenen Ansprüche, **da*durch gekennzeichnet, dass*** der Ablauf (PA) der Konfigurationsänderung von einer zentralen Steuerkomponente (ZE) in einem der zumindest zwei Netzwerke (N1, N2), insbesondere im Kommunikationsnetz, erstellt, gespeichert und verwaltet wird (103).

7. Verfahren nach Anspruch 6, ***durch gekennzeichnet, dass*** eine Übertragung der dezentral durchführbaren Ablaufeinheiten (PAVx) an die zumindest eine vorgebbare, dezentrale Ablaufsteuereinheit (Sx) durch die zentrale Steuerkomponente (ZE) durchgeführt wird (105).

8. Verfahren nach einem der Ansprüche 1 bis 5, ***dadurch gekennzeichnet, dass*** der Ablauf (PA) der Konfigurationsänderung koordiniert in einem der zumindest zwei Netzwerke (N1, N2), insbesondere im Kommunikationsnetz, dezentral erstellt, gespeichert und verwaltet wird (103).

9. Verfahren nach einem der vorangegangenen Ansprüche, **da*durch gekennzeichnet, dass*** für eine laufende Anpassung der digitalen Komponentenmodelle (KMx) Lern-Algorithmen verwendet werden oder ein Verhalten der zumindest zwei verbundenen Netzwerke (N1, N2) herangezogen wird (106).

10. Verfahren nach einem der vorangegangenen Ansprüche, **da*durch gekennzeichnet, dass*** eine Netzwerkanalyse von zumindest einem der zumindest zwei Netzwerke (N1, N2) automatisch oder zumindest teilweise automatisch durchgeführt wird (101).

11. Verfahren nach einem der vorangegangenen Ansprüche, **da*durch gekennzeichnet, dass*** als zumindest eines der zumindest zwei Netzwerke (N1, N2) ein Energieversorgungsnetz oder ein Fertigungssystem oder ein Gebäudemanagementsystem vorgesehen wird.
